# EUROPÄISCHE PATENTANMELDUNG

(11) **EP 2 278 544 A1**
(43) Veröffentlichungstag der Anmeldung: **26.01.2011**
(21) Anmeldenummer: 10166491.0
(22) Anmeldetag: 18.06.2010
(51) Int. Cl.: G06Q 30/00

(54) **Verfahren zur Übermittlung von Inhalten**

(30) Priorität: 07.07.2009 DE 102009032163
(71) Anmelder: Deutsche Post AG, 53113 Bonn (DE)
(72) Erfinder: Bobinski, Mike, 53113, Bonn (DE); Michalak, Bernhard, 53129, Bonn (DE)
(74) Vertreter: Jostarndt, Hans-Dieter

(57) **Zusammenfassung**

Es wird ein Verfahren zur Auswahl von Nachrichten vorgeschlagen, insbesondere. ein Verfahren zur Auswahl von Nachrichten, wobei das Verfahren durch folgende Schritte gekennzeichnet ist:
- Identifizieren eines Endgerätes, mit dessen Hilfe ein Nutzer Zugang zum Internet hat;
- Aufzeichnen des Nutzerverhaltens im Internet;
- Analysieren des Nutzerverhaltens im Internet;
- Zuordnen des Nutzers zu einer Mikrozelle; und
- Auswählen einer oder mehrerer Nachrichten gemäß dem Nutzerverhalten und gemäß der Zugehörigkeit zu einer bestimmten Mikrozelle.

Gemäß dem Verfahren wird die Nachricht anschließend auf elektronischem oder konventionellem Postweg übermittelt. Die Berücksichtigung der Zugehörigkeit zu einer Mikrozelle, die den Rückschluss auf soziodemographische Daten zulässt, verbessert die Auswahl einer Nachricht für einen bestimmten Nutzer.

## Beschreibung

### Gebiet der Erfindung

Die Erfindung betrifft ein Verfahren zur Auswahl von Nachrichten. Insbesondere betrifft die Erfindung ein Verfahren nach Anspruch 1.

### Hintergrund der Erfindung

Aus dem Stand der Technik sind eine Reihe von Verfahren bekannt, um Werbung möglichst zielgerichtet an eine Zielgruppe für ein Produkt oder eine Dienstleistung zu übermitteln. Typischerweise ist es nicht zweckmäßig Werbung für Luxuswaren an Personen zu richten, die nur über ein niedriges Einkommen verfügen. Die bekannten Verfahren gehen immer von einer Sammlung von Interessen eines einzelnen Nutzers aus. Daneben wird die geographische Lage des Anbieters des Produktes oder der Dienstleistung berücksichtigt. In einem konkreten Beispiel bedeutet das, dass einem Nutzer, der in Hamburg wohnt keine Werbung eines Fitnessclubs im Raum München übermittelt wird.

Aus dem Stand der Technik sind Verfahren und Vorrichtungen bekannt, um den Datenverkehr in einem Netzwerk mit nutzerbezogenen Daten zu kennzeichnen, um die Übertragung von auf den Nutzer zugeschnittener Werbung mit einer Werbekampagne zu erleichtern. Die nutzerbezogenen Daten werden dadurch gewonnen, dass sich der Nutzer mit einem Computer mit dem Netzwerk verbindet. Eine Werbekampagne setzt voraus, dass geeignete Nachrichten an den Nutzer übermittelt werden, unabhängig von der Art und Weise wie die Übermittlung erfolgt.

Das Abliefern von gezielten Nachrichten an den Computer eines Nutzers, die auf spezifischen Nutzerinformationen basieren, wie zum Beispiel Nutzerprofilen und Zugangsinformationen, ist von großer Bedeutung für viele Arten von Produzenten und Lieferanten von Inhalten, wie zum Beispiel Werbetreibende. Online-Werbung im Internet wird dazu eingesetzt, um den Verkauf zu fördern. Beispiele von Online-Werbung schließen Bannerwerbung ein, die auf Web-Seiten dargestellt werden, sowie Werbung, die auf Suchmaschinen-Ergebnisseiten, elektronischen Nachrichten und anderen zielgerichteten Medien dargestellt werden. Solche zielgerichtete Werbung unterscheidet sich von allgemeiner Werbung, die national verbreitet wird. Nutzerbezogene Werbung ist daraufhin zugeschnitten, dass sie zu einem bestimmten Kontext passt. Dies gestattet es den Werbetreibenden, Werbebotschaften zu übermitteln, die sehr wahrscheinlich für einen bestimmten Nutzer relevant sind und ihn dazu ermutigen, auf die Werbung zu reagieren.

Im Allgemeinen wird eine Anzahl von unterschiedlichen Werbenachrichten abwechselnd bestimmten Zielnutzern zu unterschiedlichen Zeiten zugestellt. Um eine effektive Werbekampagne zu gestalten, ist es notwendig, Werbung zu schaffen und den richtigen Nutzern zum richtigen Zeitpunkt zu übermitteln. Die Komponenten einer solchen Werbekampagne beinhalten die gewünschte demographische Reichweite, die gewünschte geographische Reichweite, die gewünschte Häufigkeit und Dauer der Kampagne und den Betrag, der für die unterschiedlichen Segmente ausgegeben werden soll. Der relative Erfolg einer Werbekampagne wird üblicherweise durch eine Standardmetrik bestimmt. Die Metrik beschreibt die Anzahl von potentiellen Käufern innerhalb der Zielgruppe, die durch eine Werbebotschaft erreicht wurde.

Für Online-Werbung ist es für die effektive Ablieferung von Werbebotschaften entscheidend, ob der Werbetreibende die Merkmale der Zielgruppe gut ermitteln kann.

Neben der beschriebenen Online-Werbung ist es auch möglich, über Kundenkarten das Kaufverhalten von einzelnen Kunden zu analysieren und zu einem späteren Zeitpunkt diese Kunden gezielt mit aus gewählten Werbemitteln anzusprechen.

Aus der US 2008/0255944 A1 ist eine Plattform für das Management von Online-Werbung bekannt. Bei der bekannten Plattform wird eine dauerhafte Netzwerk-Kennzeichnung einem Nutzerendgerät zugeordnet, welches als Zugang zu einem Netzwerk benutzt wird, das Werbebotschaften versendet. Die Kennzeichnung umfasst alphanumerische Daten, die relevante demographische Daten über den Nutzer und das Endgerät enthalten, um die Zustellung von Direktwerbung innerhalb des Netzwerkes zu erleichtern. Die Daten sind eingebettet in Anfragen, die von dem Nutzergerät zu einem Server oder einem Netzwerk übermittelt werden. Eine Werbeplattform verarbeitet bestimmte Nutzerdaten und ergänzt diese Informationen mit bestimmten extrinsischen Daten. Eine Analysenstufe verarbeitet das Verhalten des Nutzers, den Kontext und die Reaktion auf Werbebotschaften.

Eine Schwierigkeit bei den bekannten Werbemaßnahmen ist, dass stets persönliche Daten benötigt werden, um Werbung in dem einen Medium an einen möglichen Kunden zu liefern, wobei die Werbung auf dem Verhalten des Nutzers in einem anderen Medium basiert. Die erforderlichen persönlichen Daten müssen die Identifikation des Nutzers ermöglichen, z. B. die Wohnanschrift, Bankverbindungen oder Telefonnummern und so weiter enthalten. Eine Möglichkeit um diese Schwierigkeit zu überwinden, ist ein Dienstleister, der sowohl als Internetprovider als auch als Fernsehsender tätig ist. In diesem Fall ist es möglich, basierend auf dem Verhalten des Nutzers im Internet - insbesondere dem Suchverhalten des Nutzers - Werbung für diesen auszuwählen und auf seinen Festplatten Recorder (PVR: Personal Video Recorder) abzuspeichern.

### Zusammenfassung der Erfindung

Die Erfindung schlägt ein Verfahren zur Auswahl von Nachrichten vor. Insbesondere schlägt die Erfindung ein Verfahren zur Auswahl von Nachrichten vor, wobei das Verfahren durch folgende Schritte gekennzeichnet ist:
- Identifizieren eines Endgerätes, mit dessen Hilfe ein Nutzer Zugang zum Internet hat;
- Aufzeichnen des Nutzerverhaltens im Internet;
- Analysieren des Nutzerverhaltens im Internet;
- Zuordnen des Nutzers zu einer Mikrozelle; und
- Auswählen einer oder mehrerer Nachrichten gemäß dem Nutzerverhalten und gemäß der Zugehörigkeit zu einer bestimmten Mikrozelle.

Bei einer Weiterbildung der Erfindung ist es vorgesehen, dass das Zuordnen eines Nutzers zu einer Mikrozelle anhand seiner Wohnadresse erfolgt. In diesem Fall kann das Verfahren dadurch verfeinert werden, dass die Zuordnung straßenabschnittsweise erfolgt.

Vorteilhafterweise kann das Verfahren den Schritt aufweisen, dass das Aufzeichnen des Nutzerverhaltens in einer agglomerierten Form für mehrere Nutzer in derselben Mikrozelle erfolgt.

Bei einer anderen Ausbildungsform der Erfindung weist das Verfahren den Schritt auf, dass das Aufzeichnen des Nutzerverhaltens auf der Ebene eines individuellen Nutzers erfolgt.

Zweckmäßigerweise kann das Aufzeichnen und/oder das Analysieren des Nutzerverhaltens fortgesetzt werden, um die Daten über den Nutzer dynamisch zu verfeinern.

Darüber hinaus hatte es sich als vorteilhaft erwiesen, eine Mikrozelle dynamisch zu verändern.

Bei einer Ausführungsform der Erfindung wird das Endgerät mit einer Nutzer-ID identifiziert.

Mit Vorteil wird bei dem erfindungsgemäßen Verfahren ein Cookie hinterlegt, um das Endgerät zu identifizieren.

Bei einer weiteren Ausbildung der Erfindung wird die ausgewählte Nachricht auf einem physischen Medium und/oder als elektronische Datei übermittelt.

Weitere Merkmale und Vorteile der Erfindung werden durch das Lesen der detaillierten Beschreibung im Zusammenhang mit der beigefügten Zeichnung offenbart. Die Erfindung betrifft ganz allgemein ein Verfahren zur Auswahl von Nachrichten. Dieses Verfahren findet beispielsweise bei der Steuerung von Werbekampagnen für bestimmte Produkte oder Dienstleistungen Anwendung.

Die anschließende Übermittlung der Nachrichten kann dabei sowohl über sogenannte Banner im Internet erfolgen als auch auf ganz konventionelle Weise durch die Zusendung von Werbebroschüren mit herkömmlicher Post. Weiterhin ist es denkbar, dass Werbeeinblendungen beim Betrachten von Fernsehausstrahlungen stattfinden oder in entsprechender Weise Werbebeiträge in Hörfunksendungen ganz gezielt für einzelne Nutzer eingeblendet werden, was im Bereich des Internetradios denkbar ist. Zum Beispiel ist es ein Ziel einer Werbekampagne, einen Nutzer ausfindig zum machen, der ein konkretes Interesse für das Produkt "Camcorder" hat. Um dieses Produkt noch weiter eingrenzen zu können, sind soziodemographische Merkmale dieses Nutzers wie sein Einkommensniveau und sein Alter von weiterem Interesse, um die Werbung gezielt für diesen Nutzer auswählen zu können. Dazu treten weiterhin geographische Merkmale die den Wohnort des Nutzers betreffen, um beispielsweise auf Filialstandorte hinweisen zu können, die in der näheren Umgebung des Wohnortes des Nutzers liegen.

Es gibt bereits kommerziell zugängliche Datenbanken mit Marketing- und Vertriebsrelevanten Informationen über potenzielle Kunden, die soziodemographische Daten, Konsumdaten aus Versand- und stationärem Handel, Strukturdaten, sowie sich Daten zu Gebiet und Region enthalten. Eine solche Datenbank wird beispielsweise von der Deutschen Post unter der Bezeichnung "Microdialog" angeboten.

Der Vorteil bei der Nutzung solcher Datenbank ist, dass mit relativ geringen Streuverlust potenzielle Interessenten für Produkte und Dienstleistungen gezielt angesprochen werden können, beispielsweise durch Zusendung von Werbeunterlagen usw.

### Kurze Beschreibung der Zeichnung

In der Zeichnung ist das erfindungsgemäße Verfahren illustriert. Es zeigen
- Fig. 1: eine Veranschaulichung der Struktur der zur Verfügung stehenden Daten;
- Fig. 2: eine schematische Darstellung, wie die Interessen eines Nutzers ermittelt werden;
- Fig. 3: eine schematische Darstellung des Verfahrens zur Auswertung der Daten, die im Zusammenhang mit den Interessen eines Nutzers gesammelt werden;
- Fig. 4: eine schematische Darstellung von Kundenprofilen:
- Fig. 5: eine schematische Darstellung wie eine Werbekampagne mit Hilfe von Kundenprofilen geplant wird; und
- Fig. 6: ein schematisches Ablaufdiagramm zur Steuerung einer Werbekampagne.

In den Figuren der Zeichnung sind gleiche oder einander entsprechende Merkmale mit denselben Bezugszeichen versehen.

### Detaillierte Beschreibung von Ausführungsbeispielen der Erfindung

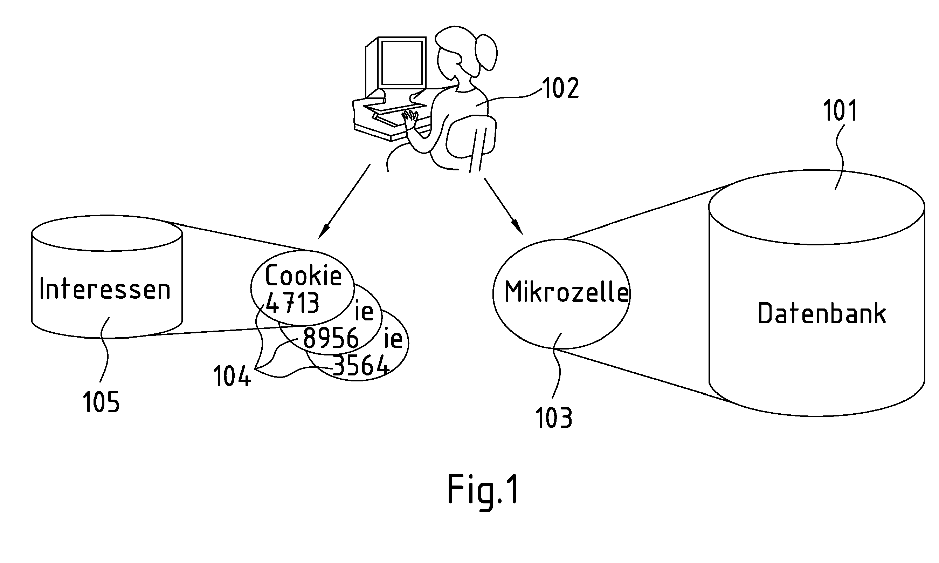

In Fig. 1 ist schematisch der Grundaufbau der zur Verfügung stehenden Daten dargestellt. In einer Datenbank 101 werden Daten zu einem Nutzer 102 zusammengeführt. Weiterhin gehört der Nutzer 102 durch seinen Wohnort einer bestimmten sogenannten Mikrozelle 103 an.

Im Folgenden soll unter dem Begriff "Nutzer" eine oder mehrere Personen verstanden werden, die Zugang zum Internet oder zu Fernsehsendern mit einem Endgerät in einem Haushalt oder in Geschäfts- oder Verkaufsräumen haben. Das Endgerät kann dabei ein Fernsehgerät, eine Settopbox, ein Computer oder ein mobiles Endgerät sein.

Aus datenschutzrechtlichen Gründen werden nutzerbezogene Daten nicht auf der Ebene eines einzelnen Haushaltes gesammelt und gespeichert, sondern es wird eine Anzahl von Haushalten zu einer Gruppe zusammengefasst, die beispielsweise zwischen 3 bis 100, vorzugsweise 4 bis 50, noch bevorzugter 5 bis 10 Haushalte umfasst. Eine solche Gruppe von Haushalten wird als Mikrozelle bezeichnet. Die Mikrozelle kann je nach Wohngebiet aus einem Gebäude aber auch aus mehreren benachbarten Gebäuden bestehen. Die in der Datenbank abgespeicherten soziodemographischen Daten werden aus frei zugänglichen öffentlichen Statistiken, Umfragen, Hochrechnungen oder anderen verfügbaren Haushaltsdaten gewonnen. Die Mikrozelle ist unter diesem Aspekt als ein Bündel von Haushalten zu verstehen, denen die verfügbaren soziodemographischen Daten zugeschrieben werden, wobei diese Daten nicht absolut korrekt, sondern nur mit einer gewissen statistischen Wahrscheinlichkeit für einen einzelnen Haushalt zutreffen. Ein Vorteil hierbei ist jedoch, dass Lücken in den verfügbaren Daten für einen bestimmten Haushalt durch die Daten für einen anderen Haushalt, der sich in derselben Mikrozelle befindet, aufgefüllt werden können. Man macht sich dabei das Prinzip "gleich und gleich gesellt sich gern" zu Nutzen und geht davon aus, dass in denen zu einer bestimmten Mikrozelle gehörenden Haushalte sehr ähnliche soziodemographische Eigenschaften, Interessen und Verhaltensmuster vorherrschen.

Bei einem Ausführungsbeispielen der Erfindung ist vorgesehen, die zu einer bestimmten Mikrozelle gespeicherten Daten dynamisch an Veränderungen anzupassen. Eine solche dynamische Anpassung ist beispielsweise dann besonders vorteilhaft, wenn ein Wohngebiet durch Generationenwechsel seinen Charakter verändert. Ein anderes Beispiel ist ein Stadtviertel, das ursprünglich von Menschen mit geringem Einkommen bewohnt wurde, aber wegen des billigen Wohnraums mehr und mehr Künstler und Studenten anzieht und später auch gutsituierte Bevölkerungsschichten, die dieses Umfeld schätzen.

Die Zuordnung zu einer Mikrozelle 103 erfolgt anhand der Wohnadresse eines Nutzers, die beispielsweise durch den Einkauf im Internet bei einem oder mehreren Anbietern bekannt geworden ist. Auf diese Weise ist es möglich, den Nutzer bzw. eine Nutzer-ID eindeutig zu einer Wohnadresse zuzuordnen. Die Wohnadresse wiederum lässt eine Zuordnung zu einer Mikrozelle zu. Bei einer Verfeinerung des erfindungsgemäßen Verfahrens ist es vorgesehen, dass einer Mikrozelle bestimmte Straßen nicht nur als Ganzes zugeordnet sind, sondern dass die Zuordnung zu einer Mikrozelle straßenabschnittsweise erfolgt.

Neben den soziodemographischen Daten ist für die Erfindung weiterhin eine Kenntnis über das Verhalten eines Nutzers im Internet notwendig. Dieses sogenannte Nutzerverhalten (Englisch: "behavioural targeting") wird zur gezielten Aussteuerung von Inhalten, zum Beispiel von Werbebannern, genutzt. Zur Untersuchung des Nutzerverhaltens wird das Surfverhalten des Nutzers im Internet herangezogen, wobei hier durch die Registrierung von besuchten Seiten, deren Inhalten beziehungsweise das Kaufverhalten in Onlineshops einschließlich von Fernsehverkaufskanälen auf die Interessensgebiete und das Milieu des Nutzers oder der Nutzer geschlossen wird, wenn mehrere Nutzer dasselbe Endgerät benutzen.

Um das Nutzerverhalten im Internet aufzeichnen zu können, muss das Endgerät des Nutzers bei allen Seitenaufrufen identifiziert werden können. Dies kann zum Beispiel auf Basis einer abrufbaren ID des Endgerätes, des Zugangsknoten zum Internet oder einer Markierung des Endgerätes erfolgen. Als Markierungstechnik haben sich im Internet sogenannte "Cookies" 104 etabliert, die über die jeweiligen Websites in einem Browser des Nutzers gesetzt werden. Cookies sind Textpakete, die von einem Netzwerkbrowser geschickt werden und die von einem Browser, der auf einem bestimmten Computer installiert ist, jedes Mal unverändert zurückgeschickt werden, wenn der Browser auf den Server zugreift. Sie werden dazu eingesetzt, um Informationen über den Nutzer zu authentifizieren, zu verfolgen und zu aktualisieren, wie zum Beispiel bevorzugte Web-Seiten oder den Inhalt von elektronischen Einkaufswagen. Das Verhalten, das aufgezeichnet und untersucht wird, ist also das Verhalten der jeweiligen Browserinstanz. Wird eine Browserinstanz von mehreren natürlichen Personen benutzt, werden über das jeweilige Cookie Informationen zu mehreren Nutzern aufgezeichnet. Aus diesem Grund wird im Folgenden auch von einer Nutzer-ID gesprochen, die einen oder mehrere Nutzer umfasst.

Die abrufbare ID ist in einer Ausführungsform der Erfindung die Nutzer-ID.

Bei der Auslegung des Schutzumfanges der Erfindung soll jedoch stets der einzelne Nutzer stellvertretend auch für eine Gruppe von Nutzern stehen. Umgekehrt ist es auch möglich, dass eine Gruppe von Nutzern nur einen einzigen Nutzer umfasst. Die Nutzer-ID kann dementsprechend eine oder mehrere natürliche Personen umfassen und ist anonymisiert. Von der Nutzer-ID kann nicht auf eine natürliche Person geschlossen werden. Das Nutzerverhalten wird in seiner Gesamtheit als "Interessen" 105 zusammengefasst und durch Daten in einem Datenspeicher 105 repräsentiert. Der Einfachheit halber wird im Folgenden der spezifische Inhalt eines Datenspeichers und der Datenspeicher selbst mit demselben Bezugszeichen bezeichnet.

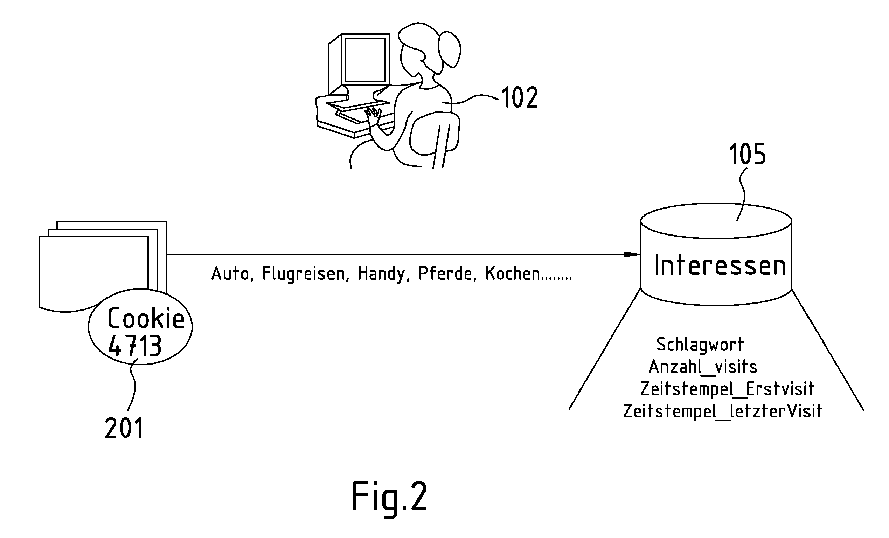

Fig. 2 veranschaulicht, wie die Interessen 105 eines Nutzers 102 ermittelt werden. Für das Sammeln von Interessen 105 eines Nutzers 102 wird im Zusammenhang mit dieser Erfindung ein netzwerkspezifisches Cookie 201 benutzt, so dass über das Cookie 201 die Interessen eines Nutzers gesammelt werden können. Die Nutzung anderer vermarkterspezifischer Cookies bleibt hiervon unberührt. Das netzwerkspezifische Cookie 201, welches für die vorliegende Erfindung notwendig ist kommt zu den bereits vorhandenen Cookies hinzu.

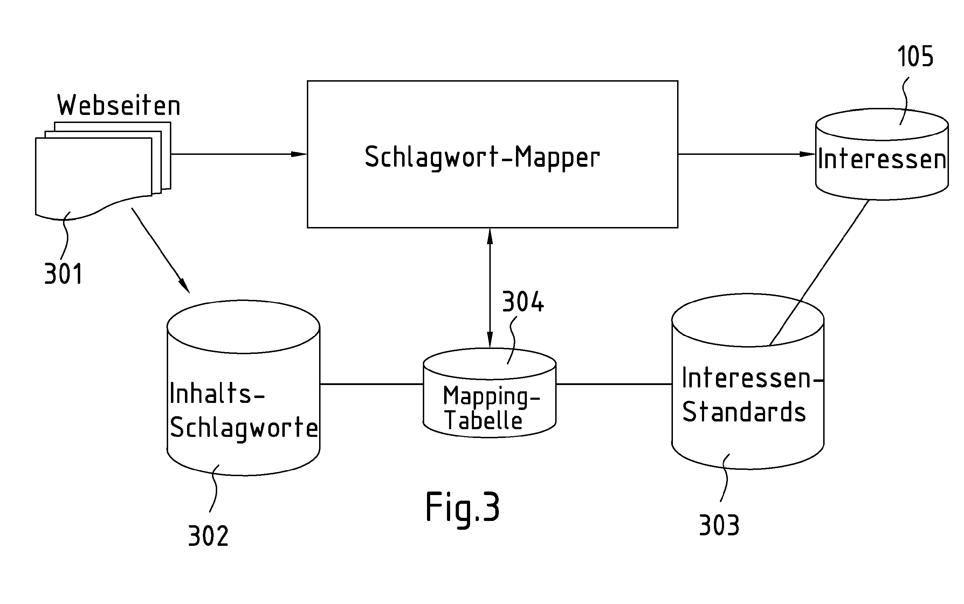

In Figur 3 ist schematisch veranschaulicht, wie die Interessen eines Nutzers an Hand seines Verhaltens im Internet ermittelt werden.

Um für das Nutzerverhalten relevante Informationen, welche den Interessen 105 entsprechen, an das Netzwerk übermitteln zu können, müssen sämtliche Web-Seiten 301 im Netzwerk mit einem Merkmal ausgestattet sein, das die Identifikation dieser Seiten gestattet. Dieses Merkmal wird auch als Tracking-Pixel bezeichnet und ist in Figur 3 nicht gezeigt. Über das Tracking-Pixel und das Netzwerk spezifische Cookie 201 können die auf den Seiten enthaltenen Informationen wie URL und Inhaltsschlagworte 302 (Englisch: content-tags) übermittelt werden. URL bedeutet "Uniform Ressource Locator" und identifiziert eine Ressource über das verwendete Netzwerkprotokoll und den Ort der Ressource in einem Computernetzwerk. Die URLs und die Inhaltsschlagworte werden von den Seitenbetreibern beziehungsweise Vermarktern der Seiten festgelegt. Die Inhaltsschlagworte sind folglich vermarkterspezifisch.

Auf Seiten des Netzwerkbetreibers wird ein so genannter Interessenstandard 303 festgelegt, der die Struktur von Interessensgruppen darstellt, die eine hohe Relevanz für die Bildung von Zielgruppen oder Profilen von Kunden hat. Die einzelnen Interessensgruppen stehen in einer Beziehung zu den vermarkterspezifischen Inhaltsschlagworten. Die Inhaltsschlagworte werden erfindungsgemäß den Interessenstandards des Netzwerkes zugeordnet, wobei die Zuordnung über ein zuvor festgelegtes Regelwerk bestimmt ist. Das Regelwerk kann von dem Netzwerkbetreiber verändert werden, um neue Erkenntnisse über das Verhalten von Nutzern in die Zuordnung einfließen lassen zu können. Die Zuordnung zwischen einem Interessenstandard und den Inhaltsschlagworten wird auch als Mapping bezeichnet und mithilfe einer Mappingtabelle 304 durchgeführt.

Im weiteren Verlauf des Mappings werden die aus dem Interessenstandard konkret abgeleiteten Interessen des Nutzers beziehungsweise der Nutzer-ID zugeordnet. Dabei wird nicht nur das konkrete Interesse hinterlegt, sondern auch, wie oft ein solches Interesse zugeordnet wurde und wann der erste und letzte Eintrag dieses Interesses erfolgt ist. Dieser Schnitt erfolgt in einer als Schlagwort-Mapper 305 bezeichneten Stufe. Über die zeitliche Abfolge der Einträge lassen sich Aussage über Interessensdauer und Interessenshäufigkeiten ableiten. Es ist auf diese Weise möglich Fragen der folgenden Art zu beantworten: Wie lange interessiert sich der Nutzer für eine Kategorie XY? Wie oft und in welchem Zeitraum interessiert sich der Nutzer für die Kategorie XY?

Grundsätzlich ist es möglich, die Interessen von Nutzern ohne jegliche Restriktionen zu sammeln. Allerdings sind aus datenschutzrechtlichen Gründen oder wegen einer im Laufe der Zeit abnehmenden Leistungsfähigkeit des Mappings bei zunehmenden Datenmengen Löschungen ganzer Nutzer-IDs oder Teillöschungen von Interessen innerhalb von Nutzer-IDs zu berücksichtigen. Die Löschungen können beispielsweise anhand der Zeitdauer erfolgen, die seit dem erstmaligen Aufrufen einer Internetseite oder seit dem letztmaligen Aufrufen einer Internetseite vergangen ist.

Die Verbindung zwischen einer Mikrozelle 103 und einem Cookie 201 beziehungsweise einer Nutzer-ID wird über die physische Adresse eines Nutzers hergestellt. Hierzu wird ein sogenannter Registrierungsdatenpartner benötigt. Bei dem Registrierungsdatenpartner handelt es sich um eine Partei, die eine Internetpräsenz besitzt und aus ihrem Geschäftsmodell heraus über eine große Anzahl von Kundenadressen verfügt und weiterhin von vielen Internetnutzern besucht wird. Typischerweise gehören Versteigerungsportale und Online Shops zu potenziellen Registrierungsdatenpartnern. Eine weitere Möglichkeit besteht in der Kooperation mit einem Netzzugangsprovider.

Besucht ein Nutzer die Seite eines solchen Registrierungsdatenpartners, wird die Adresse des Nutzers ermittelt, die beim Registrierungsdatenpartner hinterlegt ist. Beim Registrierungsdatenpartner liegt eine Zuordnung zwischen der Adresse und der zugeordneten Mikrozelle vor. Durch Abfrage dieser Zuordnung ist die zugehörige Mikrozelle für diese Adresse erkennbar. Sofern schon ein Netzwerkcookie 201 für diesen Nutzer beziehungsweise die Nutzer-ID existiert, kann auch die Verbindung zwischen dem Cookie 201 beziehungsweise der Nutzer-ID und der Mikrozelle hergestellt werden. Sollte für diesen Nutzer noch kein Netzwerkcookie 201 existieren, wird ein Netzwerkcookie beim Registrierungsdatenpartner erzeugt und dann dieser Mikrozelle zugeordnet. Über diese Zuordnung können einem Netzwerkcookie 201 beziehungsweise einer Nutzer-ID soziodemographische und geographische Mikrozelleninformationen zugeordnet werden.

In der Netzwerkdatenbank liegen demnach strukturierte Informationen zu jeweils einer Nutzer-ID vor, die aus dem Surfverhalten und Mikrozellen Informationen gewonnen sind.

Neben dem dynamischen Verhalten einer Nutzer-ID im Internet und den mehr statischen soziodemographischen Informationen aus den Mikrozellen sind weitere Informationen zur Nutzer-ID von Bedeutung. Diese Informationen werden für Prozesse der Potenzialanalyse für die Buchung und später für die Aussteuerung von Werbung benötigt. Unter der Aussteuerung von Werbung versteht man das Zusenden von Werbebotschaften oder -nachrichten. Zu diesen weiteren Informationen gehören "Rohdaten" des Surfverhaltens, die aufgezeichnet und abgespeichert werden. Zu den Rohdaten zählen neben den bereits erwähnten Inhaltsschlagworten die besuchten Websites (URLs), die Anzahl der Besuche dieser Websites und das konkrete Datum der Besuche der Websites. Die folgende Tabelle zeigt einige Beispiele der beschriebenen Rohdaten:

| Nutzer-ID | Rohdaten aus Surfverhalten | | | | |
|---|---|---|---|---|---|
| 4711 | URL | Inhaltsschlagwort | Anzahl Besucher URL | Datum Besucher URL | ...weitere |
| | Elektrohandel.de | Elektronikartikel | 4 | 02.04.09 | |
| | | | | 16.04.09 | |
| | | | | 28.05.09 | |
| | | | | 30.05.09 | |
| | Elektrohandel.de/ camcorder | Camcorder | 3 | 16.04.09 | |

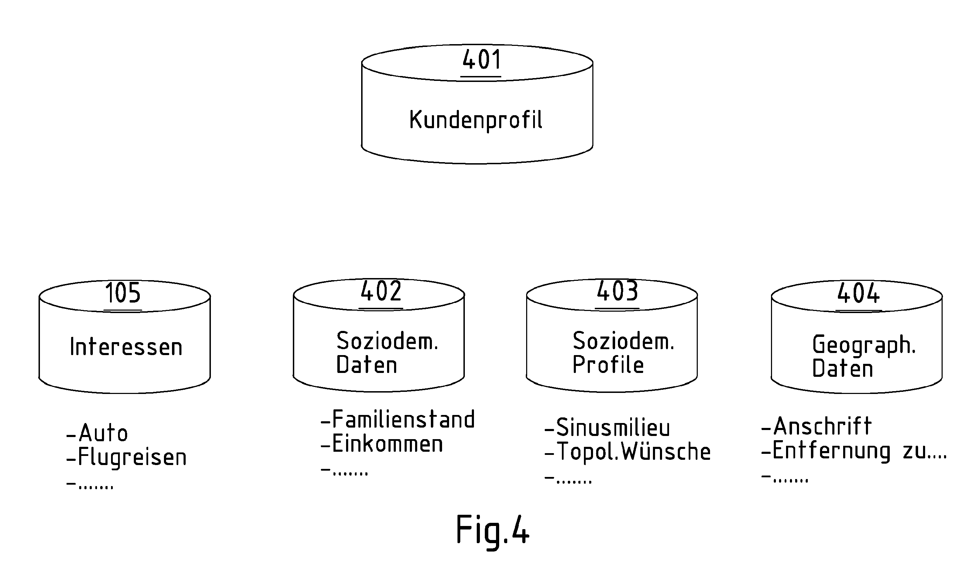

In Fig. 4 ist der Aufbau eines Kundenprofils 401 aus dynamischen und statischen Elementen dargestellt. Wie dargestellt, setzt sich das Kundenprofil 401 aus den Interessen 105 des Kunden, neuer soziodemographischen Daten 402, seinem soziodemographischen Profil 403 und geographischen Daten 404 zusammen. Ein Beispiel für ein soziodemographisches Profil 403 sind die so genannten Sinusmilieus. Die Sinusmilieus gruppieren Menschen, die sich in ihrer Lebensauffassung und Lebensweise ähneln. Die Wertorientierung dieser Menschen spielt dabei genauso eine Rolle wie deren Alter, Einstellungen zu Arbeit, Familie, Freizeit, Geld und Konsum. Die Sinusmilieus werden häufig zur zielgerichteten Platzierung von Produkten und der zugehörigen Werbung verwendet.

Aus den bisher beschriebenen Daten kann ein Werbetreibender allerdings nur eine bevorzugte Zielgruppe zusammenstellen. Beispielsweise möchte ein Werbetreibender mit einer Werbekampagne Internetnutzer mit folgendem Idealprofil ansprechen:
- Interessengebiet: konkretes Interesse für das Produkt "Camcorder";
- soziodemographische Merkmale: mittleres bis hohes Einkommen, Alter zwischen 30 und 50 Jahren;
- geographische Merkmale: ausschließlich in den südlichen Bundesländern, bevorzugt im Umkreis von 100km um seine Filialstandorte.

Die Netzwerkdatenbank 101 bietet die Möglichkeit, vor der Durchführung einer Werbekampagne eine Potenzialanalyse durchzuführen. Durch die Potenzialanalyse soll der Werbetreibende die Möglichkeit erhalten, eine auf seine Bedürfnisse optimal ausgerichtete Buchung für eine Anzahl von übermittelten Werbebotschaften ausführen zu können. Die übermittelten Werbebotschaften werden auch Englisch als ad-impressions bezeichnet. Das Ergebnis der Potenzialanalyse spiegelt die Anzahl der möglichen ad-impressions in einem vorgegebenen Zeitraum wider.

Um dieses Ziel erreichen zu können, ist es notwendig für den dynamischen Aspekt "Interesse" eine Schwelle festzulegen, oberhalb derer unter dem die Nutzer-ID mit einer bestimmten Werbekampagne tatsächlich angesprochen werden soll. Zur Festlegung einer solchen Schwelle kann zum Beispiel die Anzahl der Einträge in den Interessenstandard "Camcorder" dienen. Dabei wird angenommen, dass das tatsächliche Interesse umso größer ist, je größer die Anzahl der Einträge in dem Interessenstandard "Camcorder" ist.

In einem ersten Schritt müssen alle aktiven Nutzer-IDs ermittelt werden, bei denen die Anzahl der Einträge für das Interesse Camcorder mindestens so groß ist wie die zuvor festgelegte Zahl, wobei nur solche Nutzer-IDs betrachtet werden, deren soziodemographische und geographische Merkmale zu der betrachteten Werbekampagne passen.

Im Rahmen der Potenzialanalyse werden vor deren Durchführung noch weitere Parameter festgelegt. Zu diesen Parametern gehören:
- Zeitraum, für den die Potentialanalyse durchgeführt werden soll, das heißt, welches Zeitintervall für die Analyse betrachtet werden soll;
- ausgewählte Vermarkter, falls bei der späteren Buchung der Werbekampagne nicht alle Vermarkter aus dem Netzwerk berücksichtigt werden sollen;
- gewünschte Werbeformate, die gebucht werden sollen.

Zur Durchführung der Potentialanalyse auf Grundlage der genannten Parameter müssen in der Netzwerkdatenbank 101 Inventarlisten der am Netzwerk beteiligten Vermarkter geführt werden. Eine solche Inventarliste enthält folgende Angaben: Vermarkter, URL, Werbeform, Anzahl der Werbeform auf der Website. Unter der Werbeform ist zu verstehen, dass die Werbung auf elektronischem Wege als Werbebanner oder als E-Mail übermittelt wird oder auf konventionellem Wege als Postsendung. In anderen Ausgestaltungen der Erfindung kann die Inventarliste andere oder zusätzliche Angaben enthalten.

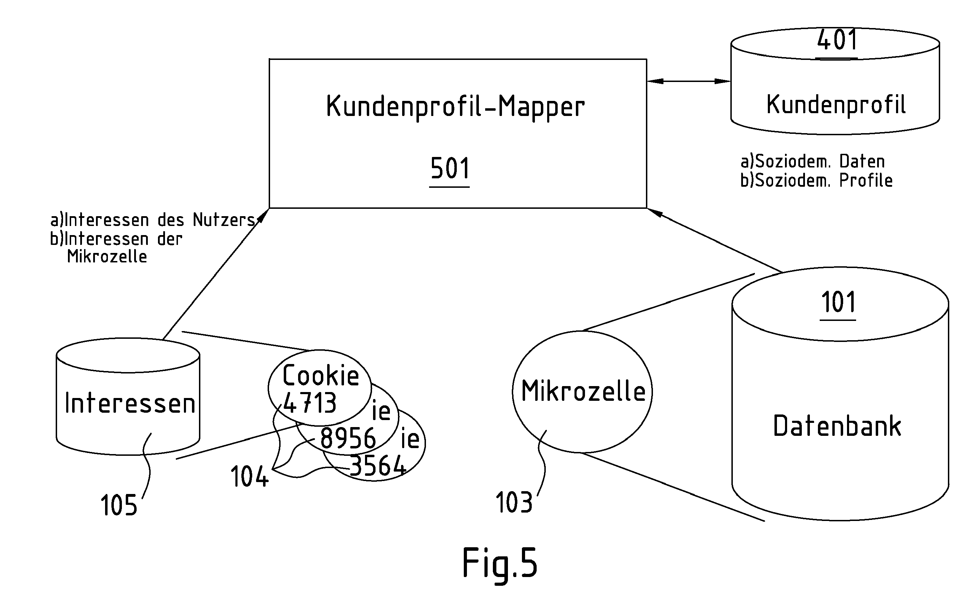

In Fig. 5 ist schematisch dargestellt, wie Kundenprofile 401 zur Planung einer Werbekampagne eingesetzt werden. Die gespeicherten Kundenprofile 401 werden zu diesem Zweck nach vorgebbaren Kriterien standardisiert. Die Kriterien werden dabei so gesetzt, dass für ein bestimmtes Kundenprofil ein bestimmtes Kaufverhalten erwartet werden kann. Die Interessen 105 eines Nutzers sowie seine Zugehörigkeit zu einer Mikrozelle 103 werden mit einer als Softwareprogramm ausgestalteten Zuordnungsstufe 501 einem Kundenprofil 401 zugeordnet. Die Zuordnungsstufe 501 wird auch als Kundenprofil-Mapper bezeichnet.

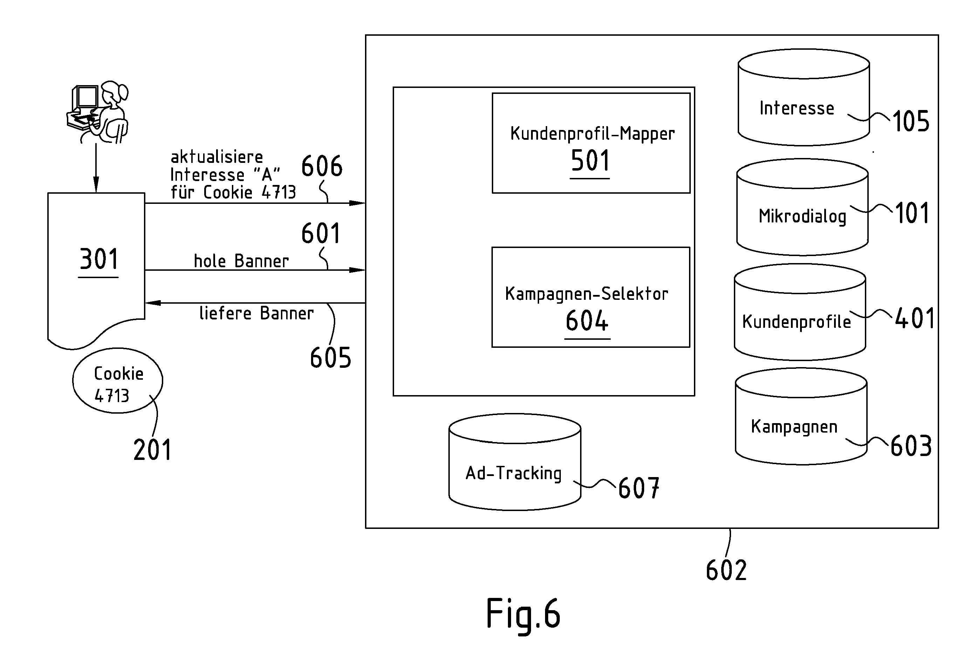

In Fig. 6 ist schließlich dargestellt, wie die ausgewählte Zielgruppe für eine Werbekampagne angesprochen wird. Die Werbemittel Aussteuerung, das heißt die Art und Weise wie ein Werbemittel an eine Zielgruppe übermittelt wird, muss weitere Parameter und Zielkriterien der Werbekampagne berücksichtigen. Zu diesen Kriterien gehören der Zeitraum, der ausführende Vermarkter, das Werbemittelformat, Webseitenkriterien, das Zielgruppenprofil sowie sonstige Kriterien. Das Zielgruppenprofil setzt sich aus den Kundenprofilen 401 zusammen, die angesprochen werden sollen. Im beschriebenen Ausführungsbeispiel wird die Werbung als Bannerwerbung übermittelt. Bei einem anderen Ausführungsbeispiel wird die Werbung jedoch als Drucksache auf dem Postweg übermittelt. Die Erfindung ist jedoch nicht auf einen bestimmten Übermittlungsweg eingeschränkt.

Die Auslieferung von Werbemitteln beginnt mit dem Abruf einer Website 301, die Werbung enthält durch einen Nutzer. Für jeden Werbeplatz in der Website führt der Browser des Nutzers einen Werbemittelabruf 601 (Pfeil 601) durch. Der Werbemittelabruf enthält folgende Informationen, nämlich die URL der Website, auf der die Werbung angezeigt werden soll, die Nutzer-ID aus dem Netzwerkcookie, Inhaltsschlagworte, die den Inhalt der Website beschreiben, in der die Werbung angezeigt werden soll, sowie eventuell das Format des Werbemittels, dass angezeigt werden soll.

Die Anfrage gelangt auf einen Server 602 des Netzwerkbetreibers. Auf dem Server 602 sind sämtliche aktuell laufenden Werbekampagnen 603 abgespeichert. Der Server 602 dient als zentrale Einheit, um es mehreren Werbetreibenden zu ermöglichen, Werbung an Nutzer zu verteilen, die Verteilung zu überwachen und den Erfolg der Werbung zu kontrollieren. Die Auswahl einer für den Nutzer passenden Kampagne erfolgt in einem Kampagnen-Selektor 604. Ein zugehöriges Werbemittel wird dann an den Browser des Nutzers ausgeliefert 605 (Pfeil 605). Zur Auswahl einer geeigneten Werbekampagne für einen bestimmten Nutzer werden in den Kampagnen-Selektor 604 folgende Schritte durchgeführt:
Zunächst wird der Vermarkter ermittelt, der für die abgerufene Website zuständig ist. Diese Information ist im Inventar der Datenbank 101 hinterlegt. Die Nutzer-ID erlaubt den Zugriff auf die persönlichen Interessen des Nutzers einschließlich der Interessen, die seiner geographischen Mikrozelle zugeordnet sind. Bei dieser Gelegenheit wird auch das für das Cookie 201 hinterlegte Interesse 105 aktualisiert (Pfeil 606). Konkret bedeutet das, dass die gespeicherten Interessen für eine Nutzer-ID dynamisch aktualisiert werden. Beide Informationen gehen in die nachfolgende Filterung der Kampagnen ein. Hierbei wird die Gesamtmenge aller momentan laufenden Kampagnen auf solche Kampagnen eingeschränkt, deren Parameter und Zielgruppenansprache auf die abgerufene Website und den jeweiligen Nutzer passen. Dieser Schritt wird als Filterung der Kampagnen bezeichnet, wonach eine oder mehrere Kampagnen für die Auslieferung in Frage kommen. Sofern mehrere Kampagnen gefunden wurden, findet eine Priorisierung der Kampagnen statt. Um die Prioritäten zu setzen, werden folgende Informationen herangezogen:
   - Erlöspotenzial
   - Fortschritt der Kampagne (noch nicht erfüllte ad-impressions);
   - Grad der Erfüllung oder über Erfüllung von Zielgruppenkriterien wie zum Beispiel eine höhere Kaufkraft eines Nutzers als ursprünglich für die Kampagne definiert wurde;
   - manuelle Gewichtung der Kampagne.

Die Kampagnenfilterung gleicht die aus dem Werbemittel bekannten Informationen über den Nutzer, den Kontext der Werbung und weitere situative Daten wie zum Beispiel Datum, Uhrzeit, usw., mit dem für die Kampagne hinterlegten Parametern und Zielgruppenkriterien ab. Schritt für Schritt werden die Kampagnen herausgefiltert, die nicht alle Vorgaben erfüllen. Die verbleibenden Kampagnen sind zur Auslieferung an die Nutzer-ID geeignet.

Schließlich wird in einem weiteren Speicher 607 hinterlegt, wie oft eine bestimmte Werbebotschaft abgerufen wurde, um zu einem späteren Zeitpunkt den Erfolg einer Werbekampagne beurteilen zu können.

### Bezugszeichenliste:

- 101: Datenbank
- 102: Nutzer
- 103: Mikrozelle
- 104: Cookie
- 105: Interessen

- 201: netzwerkspezifisches Cookie

- 301: Web-Seiten
- 302: Inhaltsschlagworte
- 303: Interessenstandard
- 304: Mapping-Tabelle
- 305: Schlagwort-Mapper

- 401: Kundenprofil
- 402: soziodemographische Daten
- 403: soziodemographische Profile
- 404: geographische Daten

- 501: Kundenprofil-Mapper

- 601: Pfeil: Bannerabruf
- 602: Server
- 603: Werbekampagnen
- 604: Kampagnen-Selektor
- 605: Pfeil: Bannerlieferung
- 606: Pfeil: Cookie Aktualisierung
- 607: Speicher für Werbeaufrufe

## Patentansprüche

1. Verfahren zur Auswahl von Nachrichten, wobei das Verfahren durch folgende Schritte **gekennzeichnet** ist:
- Identifizieren eines Endgerätes, mit dessen Hilfe ein Nutzer Zugang zum Internet hat;
- Aufzeichnen des Nutzerverhaltens im Internet;
- Analysieren des Nutzerverhaltens im Internet;
- Zuordnen des Nutzers zu einer Mikrozelle; und
- Auswählen einer oder mehrerer Nachrichten gemäß dem Nutzerverhalten und gemäß der Zugehörigkeit zu einer bestimmten Mikrozelle.

2. Verfahren nach Anspruch 1, wobei das Verfahren weiterhin den Schritt umfasst, dass das Zuordnen eines Nutzers zu einer Mikrozelle anhand seiner Wohnadresse erfolgt.

3. Verfahren nach Anspruch 2, wobei das Verfahren weiterhin den Schritt umfasst, dass es **dadurch** verfeinert wird, dass die Zuordnungsstraße abschnittsweise erfolgt.

4. Verfahren nach Anspruch 1, wobei das Verfahren den Schritt aufweist, dass das Aufzeichnen des Nutzerverhaltens in einer agglomerierten Form für mehrere Nutzer in derselben Mikrozelle erfolgt.

5. Verfahren nach Anspruch 1, wobei das Verfahren weiterhin den Schritt aufweist, dass das Aufzeichnen des Nutzerverhaltens auf der Ebene eines individuellen Nutzers erfolgt.

6. Verfahren nach Anspruch 1, wobei das Verfahren den Schritt aufweist, dass das Aufzeichnen und/oder das Analysieren des Nutzerverhaltens fortgesetzt wird, um die Daten über den Nutzer dynamisch zu verfeinern.

7. Verfahren nach Anspruch 1, wobei das Verfahren den Schritt aufweist, eine Mikrozelle dynamisch zu verändern.

8. Verfahren nach Anspruch 1, wobei das Verfahren den Schritt aufweist, das Endgerät mit einer Nutzer-ID zu identifizieren.

9. Verfahren nach Anspruch 1, wobei das Verfahren den Schritt aufweist, eine Kopie zu hinterlegen, um das Endgerät zu identifizieren.

10. Verfahren nach Anspruch 1, wobei das Verfahren den Schritt aufweist, die ausgewählte Nachricht auf einem physischen Medium und/oder als elektronische Datei zu übermitteln.
